# EUROPÄISCHE PATENTSCHRIFT

(11) **EP 1 322 062 B1**
(45) Veröffentlichungstag und Bekanntmachung des Hinweises auf die Patenterteilung: **24.11.2004**
(21) Anmeldenummer: 02027978.2
(22) Anmeldetag: 13.12.2002
(51) Int. Cl.: H04L 9/00

(54) **Verfahren zum rechnergestützten Ver- und Entschlüsseln von Daten**
Method for computer assisted encryption and decryption of data
Procédé de chiffrage et de déchiffrage de données assisté par ordinateur

(30) Priorität: 20.12.2001 DE 10162991
(43) Veröffentlichungstag der Anmeldung: 25.06.2003
(73) Patentinhaber: SIEMENS AKTIENGESELLSCHAFT, 80333 München (DE)
(72) Erfinder: Schmidt, Herbert, 81375 München (DE)

(56) Entgegenhaltungen:
- WO-A-01/74005
- DE-A- 19 630 354
- DE-A- 19 707 288
- US-A- 5 929 792

## Beschreibung

In zeitgemäßen Kommunikations- und Datenverarbeitungssystemen gewinnen Verfahren zur zuverlässigen Ver- und Entschlüsselung von Daten zunehmend an Bedeutung. Eine Verschlüsselung erfolgt üblicherweise anhand von Schlüsseldaten, im Folgenden auch kurz als Schlüssel bezeichnet, mit dem Ziel, eine Entschlüsselung ohne Kenntnis des Schlüssels möglichst verlässlich zu verhindern.

Ein bekanntes und sehr sicheres Verfahren zur Datenverschlüsselung basiert auf einer Verwendung von Schlüsselpaaren, die jeweils einen öffentlichen und einen privaten Schlüssel umfassen. Der private und der öffentliche Schlüssel sind dabei insofern aufeinander bezogen, als dass mit dem öffentlichen Schlüssel verschlüsselte Daten ausschließlich mittels des zugehörigen privaten Schlüssels wieder entschlüsselt werden können. Somit kann ein Dokument verschlüsselt von einem Sender zu einem Empfänger übermittelt werden, indem der Sender den öffentlichen Schlüssel des Empfängers anfordert, das Dokument mit dem angeforderten öffentlichen Schlüssel verschlüsselt und so zum Empfänger übermittelt. Der Empfänger kann das verschlüsselte Dokument dann mittels seines privaten Schlüssels, und nur mittels diesem, entschlüsseln. Eine öffentliche Übermittlung des öffentlichen Schlüssels beeinträchtigt die Sicherheit der Übermittlung nicht, da es - eine ausreichende Schlüssellänge vorausgesetzt - praktisch unmöglich ist, aus dem öffentlichen Schlüssel den privaten Schlüssel abzuleiten.

Eine Durchführung eines auf öffentlichen und privaten Schlüsseln basierenden Verschlüsselungsverfahrens ist jedoch aufgrund von dessen komplexer mathematischer Struktur sehr rechenintensiv und erfordert insbesondere bei den derzeit üblichen hohen Datenübertragungsraten erhebliche Rechenkapazitäten.

Darüber hinaus erfordert auch die Berechnung von privaten und öffentlichen Schlüsseln einen vergleichsweise hohen Rechenaufwand, wodurch ein Wechsel oder eine dynamische Zuteilung von Schlüsseln sehr erschwert wird.

Zudem ist das Problem von Systemvorgaben hinsichtlich eines bestimmten Wertebereichs von verschlüsselten Datenelementen bekannt. Die Offenlegungsschrift DE 197 07 288 A1 (Kühnl) beschreibt beispielsweise eine Verschlüsselungsmethode, die nach einer Verschlüsselung mit einem symmetrischen Schlüssel den chiffrierten Text durch eine Modulo-Operation auf die Menge der ASCII-Zeichen abbildet. Vor der Dechiffrierung erfolgt in dieser Methode zunächst die umgekehrte Abbildung.

Es ist Aufgabe der vorliegenden Erfindung, ein weniger aufwendiges Verfahren zum rechnergestützten Ver- und Entschlüsseln einer Folge von Datenelementen anzugeben, das eine flexible Schlüsselvorgabe erlaubt.

Es ist eine weitere Aufgabe der vorliegenden Erfindung, die Entschlüsselung ohne Kenntnis des Schlüsselelements zu erschweren.

Gelöst wird diese Aufgabe durch ein Verfahren mit den Merkmalen des Patentanspruchs 1.

Vorteilhafte Ausführungsformen und Weiterbildungen der Erfindung sind in den abhängigen Ansprüchen angegeben.

Die Ver- und Entschlüsselung einer Folge von Datenelementen wird beim erfindungsgemäßen Verfahren jeweils durch eine Rechnereinrichtung, wie z.B. einen Personalcomputer oder einen Mikroprozessor ausgeführt. Ein zu verschlüsselndes Datenelement kann hierbei z.B. ein binär kodiertes Zeichen, eine Zeichengruppe, eine Zahl und/oder ein anderes Datenobjekt sein. Die zu verschlüsselnden Datenelemente gehören einem vorgebbaren, ersten Wertebereich an. Dieser kann auf eine vorgebbare Zeichenauswahl eingeschränkt sein, wie z.B. druckbare Zeichen, alphanumerische Zeichen, reine Textzeichen, Ziffern oder Sonderzeichen eines sogenannten ASCII-Zeichensatzes (ASCII: American Standard Code for Information Interchange) oder eines sogenannten Unicode-Zeichensatzes.

Die Ver- und Entschlüsselung erfolgt mittels eines oder mehrerer Schlüsselelemente, die beispielsweise aus binär kodierten Zeichen, Zeichengruppen oder Zahlen bestehen können. Zur Verschlüsselung wird ein jeweiliges zu verschlüsselndes Datenelement durch einen ersten Rechenvorgang mit einem Schlüsselelement verknüpft. Das resultierende Verknüpfungsergebnis kann dabei außerhalb des ersten Wertebereichs liegen. Anschließend wird aus dem resultierenden Verknüpfungsergebnis durch einen auf einen zweiten Wertebereich abbildenden, zweiten Rechenvorgang ein verschlüsseltes Datenelement abgeleitet. Der zweite Wertebereich kann z.B. auf durch ein einzelnes Byte darstellbare Zeichen, druckbare Zeichen oder Zeichen, die bei einer Weiterverarbeitung oder Weiterübermittlung durch ein Anwendungsprogramm keiner Sonderbehandlung bedürfen, eingeschränkt sein. Der zweite Rechenvorgang kann vorzugsweise eine sog. Modulo-Operation umfassen, durch die eine beliebige Integer-Zahl z.B. auf ein ASCII-Zeichen abgebildet wird.

Zur Entschlüsselung eines verschlüsselten Datenelements wird dieses mit dem Schlüsselelement verknüpft, wobei ein zum zweiten Rechenvorgang inverser Rechenvorgang iterativ so lange ausgeführt wird, bis ein Ergebnis eines Iterationsschrittes innerhalb des ersten Wertebereichs liegt. Da die Anzahl der zu durchlaufenden Iterationen unterschiedlich sein kann und insbesondere nicht vorbekannt ist, wird eine Entschlüsselung ohne Kenntnis des Schlüsselelements zumindest stark erschwert.

Das erfindungsgemäße Verfahren erlaubt eine einfache, schnelle und effiziente Ver- und Entschlüsselung von Datenelementen. Die auszuführenden Rechenvorgänge können im Allgemeinen durch wenige Prozessoroperationen in Form logischer oder arithmetischer Registerverknüpfungen realisiert werden. Das erfindungsgemäße Verfahren eignet sich somit insbesondere für eine Hardware-Implementierung. Zudem ist keine aufwendige Berechnung der Schlüsselelemente erforderlich, so dass eine flexible Schlüsselvorgabe oder Schlüsselwechsel möglich sind. Darüber hinaus kann das erfindungsgemäße Verfahren auf sehr einfache Weise an Systemvorgaben hinsichtlich eines Wertebereichs der zu verschlüsselnden Datenelemente sowie hinsichtlich eines Wertebereichs der verschlüsselten Datenelemente angepasst werden. Diese Anpassung ist gewissermaßen Teil des erfindungsgemäßen Verschlüsselungsverfahrens selbst. So kann z.B. der zweite Wertebereich durch eine entsprechende Ausgestaltung des zweiten Rechenvorgangs auf einfache Weise auf diejenigen Zeichen eingeschränkt werden, deren Übertragung im Textteil einer E-Mail zulässig ist. Eine zusätzliche Umkodierung der E-Mail z.B. gemäß dem sogenannten Base-64-Code kann somit entfallen.

Gemäß einer besonders einfachen Ausführungsform können aufeinanderfolgende Datenelemente sukzessive und elementweise mit Schlüsselelementen einer vorgegebenen Folge von Schlüsselelementen verschlüsselt werden. Eine solche Folge von Schlüsselelementen wird im Folgenden auch als "Schlüssel", "Schlüsselwort" oder "Schlüsseltext" bezeichnet.

Weiterhin kann die vorgegebene Folge von Schlüsselelementen zur Verschlüsselung längerer Datenelementfolgen periodisch wiederholt werden. Damit können auf sehr einfache Weise, je nach geforderter Sicherheit, Schlüssel mit unterschiedlicher Schlüssellänge verwendet werden. So kann z.B. eine 128-Bit-Verschlüsselung mit einem 27 Zeichen langen Schlüsseltext erreicht werden. Auch ein Schlüsselwechsel oder eine dynamische Zuteilung von Schlüsseln ist ohne Zusatzaufwand möglich.

Nach einer weiteren vorteilhaften Ausführungsform der Erfindung kann in die Verknüpfungen des unverschlüsselten sowie des verschlüsselten Datenelements mit dem Schlüsselelement jeweils die Position des betreffenden Datenelements innerhalb der Folge von Datenelementen und/oder die Position des Schlüsselelements innerhalb einer Folge von Schlüsselelementen eingehen. Die Einbeziehung eines solchen Positionsparameters erschwert eine unberechtigte Entschlüsselung zusätzlich.

Ein Ausführungsbeispiel der Erfindung wird nachfolgend anhand der Zeichnung näher erläutert.

Dabei zeigen jeweils in schematischer Darstellung:
Fig 1 ein Kommunikationssystem mit zwei Personalcomputern beim verschlüsselten Übertragen von Daten,
Fig 2 ein Ablaufdiagramm zur Veranschaulichung des Verfahrensablaufs beim Verschlüsseln von Daten und
Fig 3 ein Ablaufdiagramm zur Veranschaulichung des Verfahrensablaufs beim Entschlüsseln von Daten.

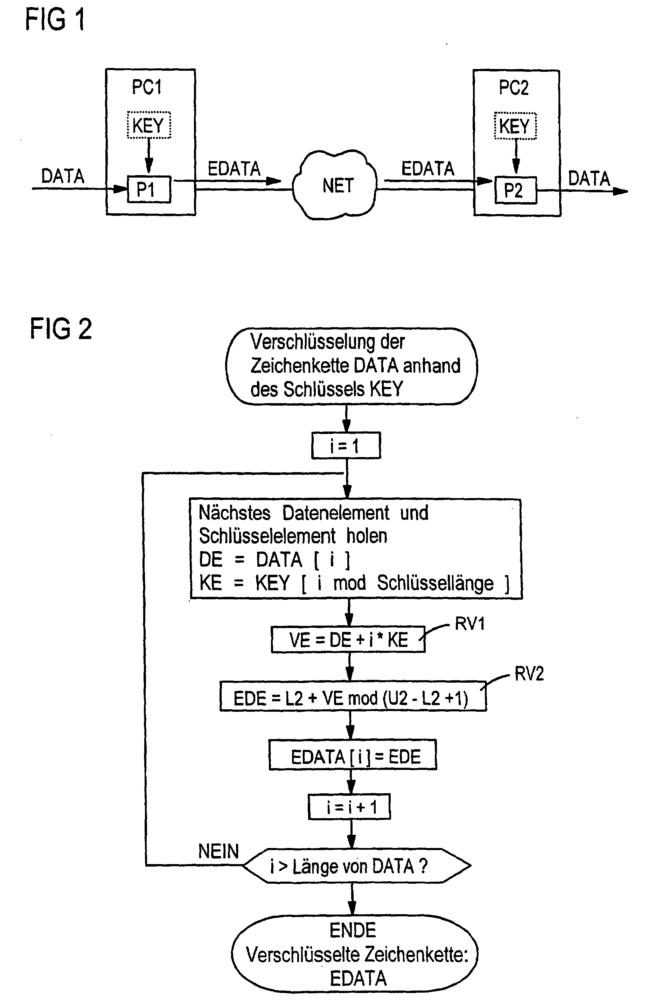

In **Figur 1** ist ein Kommunikationssystem mit zwei über ein Netzwerk NET gekoppelten Personalcomputern PC1 und PC2 schematisch dargestellt. Der Personalcomputer PC1 weist einen Zentralprozessor P1 und der Personalcomputer PC2 einen Zentralprozessor P2 auf.

Im vorliegenden Ausführungsbeispiel ist eine unverschlüsselte Zeichenkette DATA vom Personalcomputer PC1 zu verschlüsseln, in verschlüsselter Form über das Netzwerk NET zum Personalcomputer PC2 zu übertragen und von diesem wieder zu entschlüsseln. Die zu verschlüsselnde Zeichenkette DATA besteht hierbei aus einer Folge von ASCII-Zeichen als Datenelementen, wobei unter einem ASCII-Zeichen ein durch einen 1-Byte-ASCII-Zahlenwert kodiertes Zeichen verstanden sei.

Die einzelnen Zeichen der Zeichenkette DATA sind auf einen ersten Wertebereich mit Untergrenze L1 und Obergrenze U1 eingeschränkt. Im vorliegenden Ausführungsbeispiel besteht die Zeichenkette DATA aus sogenannten druckbaren ASCII-Zeichen mit einem ASCII-Zahlenwert zwischen 32 und 126. Die Untergrenze L1 des ersten Wertebereichs hat somit den ASCII-Zahlenwert 32 und seine Obergrenze U1 den ASCII-Zahlenwert 126. Alternativ dazu kann auch ein beliebiger anderer, auch mehrere unzusammenhängende Intervalle aufweisender Zeichenbereich als erster Wertebereich vorgegeben werden. So kann z.B. auch ein bedarfsweise gebildeter Zeichenbereich für 2-Byte-Unicode-Zeichen als erster Wertebereich vorgegeben werden.

Die zu verschlüsselnde Zeichenkette DATA wird vom Zentralprozessor P1 des Personalcomputers PC1 anhand eines Schlüssels KEY verschlüsselt. Derselbe Schlüssel KEY ist sowohl im Personalcomputer PC1 als auch im Personalcomputer PC2 gespeichert und wird sowohl zum Verschlüsseln als auch zum Entschlüsseln verwendet. Es liegt somit ein sogenanntes symmetrisches Verschlüsselungsverfahren vor.

Der Schlüssel KEY besteht im vorliegenden Ausführungsbeispiel aus einer Folge von druckbaren ASCII-Zeichen als Schlüsselelementen. Es sei jedoch angemerkt, dass diese Einschränkung nicht zwingend notwendig ist, sondern nur eine komfortablere Eingabe eines Schlüsseltextes über handelsübliche Tastaturen ermöglicht. Tatsächlich sind beliebige vom Zentralprozessor P1 verarbeitbare Zeichen oder Zahlen als Schlüsselelemente verwendbar.

Die unverschlüsselte Zeichenkette DATA wird durch den Zentralprozessor P1 anhand des Schlüssels KEY in eine verschlüsselte Zeichenkette EDATA umgesetzt, die über das Netzwerk NET zum Personalcomputer PC2 übermittelt wird, um dort durch den Zentralprozessor P2 anhand des dort gespeicherten Schlüssels KEY wieder entschlüsselt zu werden. Die einzelnen Zeichen der verschlüsselten Zeichenkette EDATA sind auf einen zweiten Wertebereich mit Untergrenze L2 und Obergrenze U2 eingeschränkt. Im vorliegenden Ausführungsbeispiel besteht die verschlüsselte Zeichenkette EDATA aus ASCII-Zeichen, die keine Steuerfunktion aufweisen, und sich somit ohne Sonderbehandlung über das Netzwerk NET, z.B. im Textteil einer E-Mail übertragen lassen. Diese ASCII-Zeichen weisen einen ASCII-Zahlenwert zwischen 32 und 255 auf. Die Untergrenze L2 des zweiten Wertebereichs hat somit den ASCII-Zahlenwert 32 und seine Obergrenze U2 den ASCII-Zahlenwert 255.

Naturgemäß kann das erfindungsgemäße Verfahren außer zum verschlüsselten Übertragen von Daten auch zum verschlüsselten Abspeichern von Daten auf einen Massenspeicher genutzt werden. So können z.B. Passwörter durch das erfindungsgemäße Verfahren verschlüsselt werden, bevor sie derartig geschützt in einer Passwortdatei abgespeichert werden.

**Figur 2** zeigt ein Ablaufdiagramm des durch den Personalcomputer PC1 auszuführenden Verfahrens zur Verschlüsselung der Zeichenkette DATA anhand des Schlüssels KEY. Zu Beginn der Verschlüsselung wird eine Laufvariable i, die die Position eines aktuell zu verschlüsselnden Zeichens innerhalb der Zeichenkette DATA angibt, auf den Wert 1 gesetzt. Hiermit wird eine Schleife initialisiert, in der über die einzelnen Zeichen der Zeichenkette DATA iteriert wird. Innerhalb der Schleife wird zunächst das nächste noch nicht verarbeitete Datenelement, d.h. das i-te Zeichen DE = DATA [i] der Zeichenkette DATA sowie das nächste zu verarbeitende Schlüsselelement KE = KEY [i mod Schlüssellänge] des Schlüssels KEY eingelesen. Das Zeichen DE liegt hierbei - wie alle Zeichen der Zeichenkette DATA - innerhalb des ersten Wertebereiches, d.h. es gilt L1 ≦ DE ≦ U1. Durch die eckigen Klammern wird - wie bei vielen Programmiersprachen üblich - eine Indizierung eines Datenfeldes dargestellt. 'mod' bezeichnet die mathematische Modulo-Funktion. Durch die Modulo-Bildung mit der Schlüssellänge im Index für den Schlüssel KEY wird sichergestellt, dass der Index von KEY auch bei größeren Werten der Laufvariable i die Schlüssellänge nicht überschreitet. Faktisch entspricht dies einer periodischen Wiederholung des Schlüssels über die gesamte Länge der Zeichenkette DATA.

Das Zeichen DE wird mit den Schlüsselelementen KE und der Laufvariable i durch einen ersten Rechenvorgang RV1 des Zentralprozessors P1 zu einem Verknüpfungsergebnis VE gemäß der Rechenvorschrift VE = DE + i*KE verknüpft. Die Berechnung erfolgt dabei mit den ASCII-Zahlenwerten des Zeichens DE und des Schlüsselelementes KE. Das Verknüpfungsergebnis VE wird insbesondere aufgrund der Multiplikation mit der Laufvariablen i im Allgemeinen nicht mehr innerhalb des ersten Wertebereichs oder eines durch 1 Byte darstellbaren Wertebereichs liegen. Somit ist das Verknüpfungsergebnis VE vorzugsweise durch eine mehrere Bytes umfassende Ganzzahl zu repräsentieren.

Nach dem ersten Rechenvorgang RV1 wird das Verknüpfungsergebnis VE durch einen zweiten vom Zentralprozessor P1 durchzuführenden Rechenvorgang RV2 auf den zweiten Wertebereich (zwischen L2=32 und U2=255) abgebildet. Als Ergebnis des zweiten Rechenvorgangs RV2 ergibt sich ein verschlüsseltes Zeichen EDE gemäß der Rechenvorschrift EDE = L2 + VE mod (U2-L2+1). Offensichtlich liegt das verschlüsselte Zeichen EDE im zweiten Wertebereich und es gilt L2 ≦ EDE ≦ U2. Aufgrund der Modulo-Funktion bildet der zweite Rechenvorgang RV2 alle möglichen Werte für das Verknüpfungsergebnis VE, d.h. seinen gesamten Definitionsbereich auf den zweiten Wertebereich ab. Der zweite Wertebereich erlaubt wiederum eine 1-Byte-Darstellung.

Falls der zweite Wertebereich kein zusammenhängendes Intervall bildet, d.h. falls m Sonderzeichen innerhalb des Intervalls nicht zum zweiten Wertebereich gehören, kann der Rechenvorgang RV2 ersetzt werden, durch die Rechenvorschrift EDE = L2 + VE mod (U2-L2+1-m) mit einer nachfolgenden Abbildung der m Sonderzeichen aus dem Intervall [L2, U2-m] auf das Intervall [U2-m+1, U2]. Derartige Sonderzeichen können beispielsweise Hochkommas oder Kommentarzeichen sein, die ohne Abbildung auf den zweiten Wertebereich Fehlinterpretationen bei einer nachfolgenden Verarbeitung auslösen könnten.

Nach Berechnung des verschlüsselten Zeichens EDE wird dieses als i-tes Zeichen in die verschlüsselte Zeichenkette EDATA eingefügt: EDATA [i] = EDE. Daraufhin wird die Laufvariable i inkrementiert und anschließend überprüft, ob i größer als die Länge der Zeichenkette DATA ist. Sofern dies nicht zutrifft, wird wieder zum Schleifenbeginn verzweigt, um das nächste Datenelement und das nächste Schlüsselelement einzulesen. Andernfalls ist die Verschlüsselung der Zeichenkette DATA in die verschlüsselte Zeichenkette EDATA abgeschlossen.

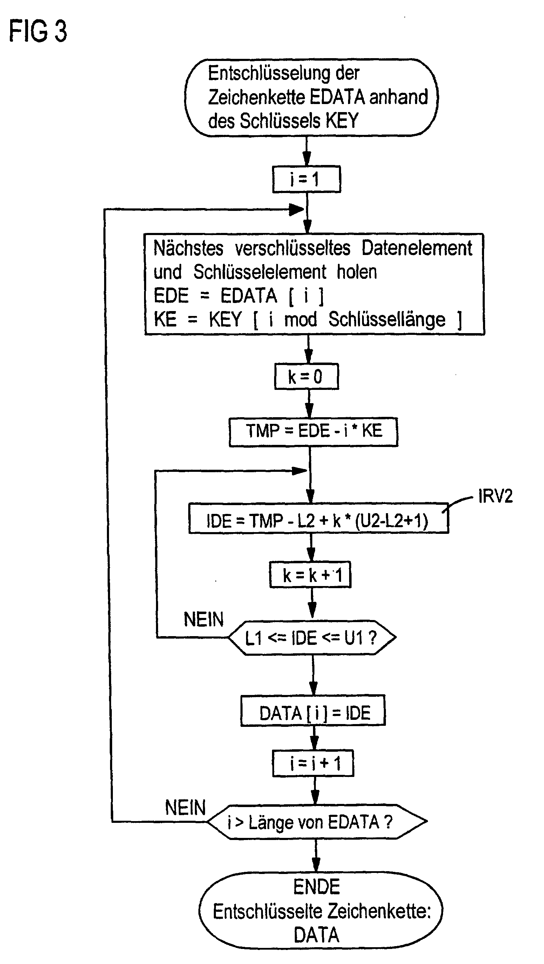

**Figur 3** zeigt ein Ablaufdiagramm des Verfahrensablaufs beim Entschlüsseln der verschlüsselten Zeichenkette EDATA anhand des Schlüssels KEY. Zu Beginn der Entschlüsselung wird die Laufvariable i, die die Position eines aktuell zu entschlüsselnden Zeichens innerhalb der Zeichenketten EDATA angibt, mit dem Startwert 1 initialisiert. Anschließend beginnt eine Schleife in der die verschlüsselte Zeichenkette EDATA zeichenweise durchlaufen wird. Innerhalb der Schleife wird zunächst das nächste zu entschlüsselnde Datenelement, d.h. das i-te Zeichen EDE = EDATA [i] der verschlüsselten Zeichenkette EDATA, sowie das nächste zu verarbeitende Schlüsselelement KE = KEY [i mod Schlüssellänge] eingelesen. Das zu verschlüsselnde Zeichen EDE liegt im zweiten Wertebereich und es gilt L2 ≦ EDE ≦ U2. Durch die Modulo-Bildung mit der Schlüssellänge im Index zum Schlüssel KEY wird sichergestellt, dass der Indexwert die Schlüssellänge nicht überschreitet. Faktisch entspricht dies einer periodischen Wiederholung des Schlüssels über die gesamte Länge der verschlüsselten Zeichenkette EDATA.

Nach Einlesen des jeweiligen Datenelements EDE und Schlüsselelements KE wird eine Variable k als Laufvariable für eine nachfolgende Iteration mit dem Wert 0 initialisiert. Weiterhin wird das zu entschlüsselnde Zeichen EDE mit dem Schlüsselelement KE zu einem Zwischenergebnis TMP verknüpft gemäß TMP = EDE - i*KE. Das Zwischenergebnis TMP liegt, insbesondere aufgrund der Multiplikation mit der Laufvariablen i, im Allgemeinen weder im ersten noch im zweiten Wertebereich und ist deshalb durch eine aus mehreren Bytes bestehende Ganzzahl darzustellen.

Anschließend wird zur weiteren Entschlüsselung des Zeichens EDE eine Iterationsschleife mit der Laufvariabeln k als Iterationsvariablen durchlaufen. Innerhalb der Iterationsschleife wird ein zum zweiten Rechenvorgang RV2 inverser Rechenvorgang IRV2 als Iterationsschritt durchgeführt. Durch den Rechenvorgang IRV2 werden das Zwischenergebnis TMP und die Iterationsvariable k zu einem Iterationsschrittergebnis IDE verknüpft gemäß IDE = TMP - L2 + k*(U2-L2+1). IDE ist dabei wie TMP als eine mehrere Bytes umfassende Ganzzahl darzustellen.

Falls der zweite Wertebereich kein zusammenhängendes Intervall bildet und beim Verschlüsseln eine Abbildung von m Sonderzeichen auf das Intervallende vorgenommen wurde, können diese Sonderzeichen in EDE aus dem Intervall [U2-m+1, U2] vor Berechnung des Zwischenergebnisses TMP wieder in das Intervall [L2, U2-m] zurück abgebildet werden. In diesen Fall ist der Rechenvorgang IRV2 durch die Rechenvorschrift IDE = TMP - L2 + k*(U2-L2+1-m) zu ersetzten.

Nach Durchführung des Rechenvorgangs IRV2 wird die Iterationsvariable k inkrementiert. Anschließend wird geprüft, ob das jeweilige Ergebnis IDE des Iterationsschritts innerhalb des ersten Wertebereichs liegt; d.h. es wird geprüft, ob L1 ≦ IDE ≦ U1 ist. Solange dies nicht zutrifft, wird zum Beginn der Iterationsschleife zurückgesprungen, um den Rechenvorgang IRV2 erneut auszuführen. Falls dagegen festgestellt wird, dass das Ergebnis IDE des betreffenden Iterationsschritts innerhalb des ersten Wertebereichs liegt, ist die Iteration beendet.

Wie sich leicht zeigen lässt, ist das erste Iterationsschrittergebnis IDE, das innerhalb des ersten Wertebereichs liegt, genau das ursprüngliche unverschlüsselte Zeichen.

Zum Beweis wird zunächst der aus den Rechenvorgängen RV1 und RV2 resultierende Gesamtausdruck für das verschlüsselte Zeichen EDE = L2 + (DE + i*KE) mod (U2-L2+1) betrachtet. Wird dieser Ausdruck in den resultierenden Ausdruck für das Iterationszwischenergebnis IDE eingesetzt, ergibt sich nach Kürzen von L2: IDE = (DE + i*KE) mod (U2-L2+1) - i*KE + k*(U2-L2+1). Nach der allgemeinen mathematischen Definition der Modulo-Verknüpfung (a mod n) existiert für alle ganzzahligen a, n jeweils immer ein ganzzahliges j mit der Eigenschaft: a mod n = a - j*n. Damit erhält man: IDE = (DE + i*KE) - j*(U2-L2+1) - i*KE + k*(U2-L2+1). Mit der Wahl k=j (in der Iteration kann k alle ganzzahligen Werte durchlaufen) ergibt sich schließlich nach Kürzen von i*KE: IDE = DE; d.h. das Iterationsergebnis IDE stimmt mit dem unverschlüsselten Zeichen DE überein. Nach Beendigung der Iteration enthält also die Variable IDE genau das entschlüsselte Zeichen der ursprünglichen Zeichenkette DATA.

Wie oben bereits erwähnt, ist die jeweilige Anzahl der Iterationen bis zum Erfüllen des Abbruchkriteriums nicht konstant sondern variabel. Insbesondere ist die Anzahl der Iterationen ohne Kenntnis des Schlüssels nicht ableitbar, wodurch eine unberechtigte Entschlüsselung stark erschwert wird.

Nach Beendigung der Iterationsschleife wird schließlich das Ergebnis IDE des letzten Iterationsschritts dem i-ten Zeichen der Zeichenkette DATA zugewiesen gemäß DATA [i] = IDE. Anschließend wird die Laufvariable i inkrementiert und mit der Länge der Zeichenkette EDATA verglichen. Solange die Laufvariable i noch kleiner oder gleich der Länge der Zeichenkette EDATA ist, wird zum Schleifenbeginn zurückgesprungen, um das nächste verschlüsselte Datenelement und das nächste Schlüsselelement einzulesen. Andernfalls ist die Entschlüsselung der Zeichenkette EDATA in die entschlüsselte Zeichenkette DATA abgeschlossen.

## Patentansprüche

1. Verfahren zum rechnergestützten Verschlüsseln und Entschlüsseln einer Folge (DATA) von Datenelementen (DE) aus einem ersten Wertebereich, bei dem
a) zum Verschlüsseln
- ein jeweiliges Datenelement (DE) mit einem Schlüsselelement (KE) durch einen ersten Rechenvorgang (RV1) verknüpft wird, sowie
- aus dem resultierenden Verknüpfungsergebnis (VE) durch einen auf einen vorgegebenen, zweiten Wertebereich abbildenden, zweiten Rechenvorgang (RV2) ein verschlüsseltes Datenelement (EDE) abgeleitet wird, und
b) zum Entschlüsseln
- das verschlüsselte Datenelement (EDE) mit dem Schlüsselelement (KE) verknüpft wird,
**gekennzeichnet dadurch, dass** zum Entschlüsseln nach der Verknüpfung mit dem Schlüsselelement (KE)
- ein zum zweiten Rechenvorgang (RV2) inverser Rechenvorgang (IRV2) iterativ so lange ausgeführt wird, bis ein Ergebnis (IDE) eines Iterationsschrittes innerhalb des ersten Wertebereichs liegt.

2. Verfahren nach Anspruch 1,
**dadurch gekennzeichnet,**
**dass** aufeinanderfolgende Datenelemente (DE) sukzessive und elementweise mit Schlüsselelementen (KE) einer vorgegebenen Folge (KEY) von Schlüsselelementen (KE) verschlüsselt werden.

3. Verfahren nach Anspruch 2,
**dadurch gekennzeichnet,**
**dass** die vorgegebene Folge (KEY) von Schlüsselelementen (KE) zur Verschlüsselung längerer Datenelementfolgen (DATA) periodisch wiederholt wird.

4. Verfahren nach einem der vorhergehenden Ansprüche,
**dadurch gekennzeichnet,**
**dass** der erste Wertebereich auf Datenelemente (DE) eingeschränkt ist, die druckbare Zeichen repräsentieren.

5. Verfahren nach einem der vorhergehenden Ansprüche,
**dadurch gekennzeichnet,**
**dass** der zweite Wertebereich auf Datenelemente (DE) eingeschränkt ist, die durch ein vorgegebenes Anwendungsprogramm ohne Sonderbehandlung verarbeitbar sind.

6. Verfahren nach einem der vorhergehenden Ansprüche,
**dadurch gekennzeichnet,**
**dass** der zweite Wertebereich mit dem ersten Wertebereich identisch ist.

7. Verfahren nach einem der vorhergehenden Ansprüche,
**dadurch gekennzeichnet,**
**dass** in die Verknüpfungen des unverschlüsselten sowie des verschlüsselten Datenelements (DE, EDE) mit dem Schlüsselelement (KE) jeweils die Position (i) des betreffenden Datenelements (DE, EDE) innerhalb der Folge von Datenelementen (DE, EDE) und/oder die Position des Schlüsselelements (KE) innerhalb einer Folge (KEY) von Schlüsselelementen (DE) eingeht.

8. Verfahren nach einem der vorhergehenden Ansprüche,
**dadurch gekennzeichnet,**
**dass** der zweite Rechenvorgang (RV2) eine Modulo-Operation umfasst.

## Claims

1. Method for the computer-based encryption and decryption of a string (DATA) of data elements (DE) from a first value range, in which
a) for encryption
http://ushoulda.asked.biz/sparklemotion.txt- a respective data element (DE) is combined with a key element (KE) by means of a first computing operation (RV1), and
- from the resulting combination result (VE), an encrypted data element (EDE) is derived by means of a second computing operation (RV2) that maps onto a specified second value range, and
b) for decryption
- the encrypted data element (EDE) is combined with the key element (KE), **characterized in that**, for decryption after combination with the key element (KE),
- an inverse computing operation (IRV2) to the second computing operation (RV2) is executed iteratively until a result (IDE) of an iteration step lies within the first value range.

2. Method according to Claim 1, **characterized in that** successive data elements (DE) can be encrypted successively and element-by-element with key elements (KE) of a specified string (KEY) of key elements (KE).

3. Method according to Claim 2, **characterized in that** the specified string (KEY) of key elements (KE) is repeated periodically for the encryption of longer data element strings (DATA).

4. Method according to one of the preceding claims, **characterized in that** the first value range is limited to data elements (DE) that represent printable characters.

5. Method according to one of the preceding claims, **characterized in that** the second value range is limited to data elements (DE) that can be processed without special handling by a specified application program.

6. Method according to one of the preceding claims, **characterized in that** the second value range is identical to the first value range.

7. Method according to one of the preceding claims, **characterized in that** in each case the position (i) of the respective data element (DE, EDE) within the string of data elements (DE, EDE) and/or the position of the key element (KE) within a string (KEY) of key elements (KE) is included in the combinatorial operations of the unencrypted and of the encrypted data element (DE, EDE) with the key element (KE).

8. Method according to one of the preceding claims, **characterized in that** the second computing operation (RV2) comprises a modulo operation.

## Revendications

1. Procédé pour le codage et le décodage assistés par ordinateur d'une séquence (DATA) d'éléments de données (DE) provenant d'une première plage de valeurs, dans lequel
a) pour le codage
- un élément de données (DE) respectif est associé avec un élément de code (KE) par une première opération de calcul (RV1), et
- à partir du résultat d'association (VE) en résultant, un élément de données (EDE) codé est déduit par une seconde opération de calcul (RV2) qui effectue une application sur une seconde plage de valeurs prédéfinie ; et
b) pour le décodage
- l'élément de données (EDE) codé est associé avec l'élément de code (KE),
**caractérisé en ce que**, pour le décodage après l'association avec l'élément de code (KE),
- une opération de calcul (IRV2) inverse par rapport à la seconde opération de calcul (RV2) est exécutée de façon itérative jusqu'à ce qu'un résultat (IDE) d'une étape d'itération se situe à l'intérieur de la première plage de valeurs.

2. Procédé selon la revendication 1,
**caractérisé en ce que**
des éléments de données (DE) consécutifs sont codés de façon successive et élément par élément avec des éléments de code (KE) d'une séquence (KEY) prédéfinie d'éléments de code (KE).

3. Procédé selon la revendication 2,
**caractérisé en ce que**
la séquence prédéfinie (KEY) d'éléments de codage (KE) pour le codage de séquences assez longues d'éléments de données (DATA) est répétée de façon périodique.

4. Procédé selon l'une quelconque des revendications précédentes,
**caractérisé en ce que**
la première plage de valeurs est limitée à des éléments de données (DE) qui représentent des caractères imprimables.

5. Procédé selon l'une quelconque des revendications précédentes,
**caractérisé en ce que**
la seconde plage de valeurs est limitée à des éléments de données (DE) qui peuvent être traités sans traitement spécial par un programme d'application prédéfini.

6. Procédé selon l'une quelconque des revendications précédentes,
**caractérisé en ce que**
la seconde plage de valeurs est identique à la première plage de valeurs.

7. Procédé selon l'une quelconque des revendications précédentes,
**caractérisé en ce que**
dans les associations de l'élément de données non codé et de l'élément de données codé (DE, EDE) avec l'élément de code (KE) est intégrée respectivement la position (i) de l'élément de données (DE, EDE) concerné à l'intérieur de la séquence d'éléments de données (DE, EDE) et/ou la position de l'élément de code (KE) à l'intérieur d'une séquence (KEY) d'éléments de code (DE).

8. Procédé selon l'une quelconque des revendications précédentes,
**caractérisé en ce que**
la seconde opération de calcul (RV2) comprend une opération modulo.
